# EUROPEAN PATENT SPECIFICATION

(11) **EP 3 296 598 B1**
(45) Date of publication and mention of the grant of the patent: **19.05.2021**
(21) Application number: 16761451.0
(22) Date of filing: 19.02.2016
(51) Int. Cl.: F16J 15/34, F04B 39/00, F04D 29/12

(54) **END SURFACE-CONTACT MECHANICAL SEAL**
GLEITRINGDICHTUNG MIT ENDFLÄCHENKONTAKT
GARNITURE MÉCANIQUE DE CONTACT DE SURFACE D'EXTRÉMITÉ

(30) Priority: 09.03.2015 JP 2015045665
(43) Date of publication of application: 21.03.2018
(73) Proprietor: Nippon Pillar Packing Co., Ltd., Osaka 532-0022 (JP)
(72) Inventor: SAKAKURA, Hiroyuki, Osaka-shi Osaka 550-0013 (JP); TANIGUCHI, Megumi, Osaka-shi Osaka 550-0013 (JP)
(74) Representative: Keil & Schaafhausen Patentanwälte PartGmbB
(86) International application number: PCT/JP2016/054780
(87) International publication number: WO 2016/143479

(56) References cited:
- DE-A1-102013 005 926
- DE-U1-202006 009 762
- JP-A- H07 269 342
- JP-A- 2013 130 212
- JP-A- 2013 130 212
- JP-A- 2014 529 052
- JP-U- S63 132 171

## Description

### TECHNICAL FIELD

The present invention relates to an end surface-contact mechanical seal that is mounted as a shaft seal means in rotary devices such as a pump, an agitator, a blower, a compressor, a turbine, etc., and more particularly to an end surface-contact mechanical seal provided with a flushing means for cooling the seal portion of a sealing ring.

### BACKGROUND ART

As disclosed in Figure 1 of Patent Literature 1, Figure 1 of Patent Literature 2, or Figures 1 to 3 of Patent Literature 3, which are examples of a conventional well-known end surface-contact mechanical seal of this type, such seal comprises a movable sealing ring, which is held movably in an axial direction by either a seal case or a rotating shaft that passes through this seal case, a fixed sealing ring, which is fixed to the other of the seal case and the rotating shaft, and a spring, which urges the movable sealing ring to be pressed against the fixed sealing ring, wherein the relative rotational sliding contact action of the sealing rings creates a shielding seal of a sealed fluid region and a non-sealed fluid region, and wherein, in order to avoid problems caused by sliding heat, etc. of the sealing rings, a flushing means is provided for discharging a flushing liquid from the downstream end of a flushing passage formed in the seal case toward the relative rotational sliding contact portions of the sealing rings (referred to above as the "seal portion").
An end surface-contact mechanical seal arrangement with the features of the preamble of claim 1 is known from JP 2013 130212 A. Neither the fixed sealing ring nor the movable sealing ring has a coating layer.

Document DE 20 2006 009 762 U1 discloses sliding rings made of carbide materials (e.g. WC, SiC) to be used in an environment where they are contacted with corrosive fluids such as HF acid, sulfuric acid, hydrochloric acid, caustic soda. To increase wear resistance, prevent corrosion and to prevent spark erosion by dissipation of static electricity diamond layers are provided on the sliding rings.

Patent Literature 1: Japanese Patent Application Laid-Open No. H6-129937
Patent Literature 2: Japanese Patent Application Laid-Open No. 2005-048818
Patent Literature 3: Japanese Utility Model Application Laid-Open No. S63-132171

### SUMMARY OF THE INVENTION

### Technical Problem

However, in the end surface-contact mechanical seal disclosed in Figure 1 of Patent Literature 1, Figure 1 of Patent Literature 2, or Figures 1 and 2 of Patent Literature 3 (hereinafter referred to as the "first conventional mechanical seal"), the flushing liquid discharge hole at the downstream end of the flushing passage is opened at only one location in the inner peripheral part of the seal case. As a result, even if the flushing liquid discharge hole is opened at a nearby position directly opposite the seal portion (see Figure 1 of Patent Literature 1), the seal portion cannot be sufficiently cooled for the entire periphery when the flushing liquid is discharged from a single flushing liquid discharge hole. Therefore, the cooling is uneven around the seal portion in the circumferential direction, and there is a risk that heat distortion will occur at the sealing end surfaces.

On the other hand, in the end surface-contact mechanical seal disclosed in Figure 3 of Patent Literature 3 (hereinafter referred to as the "second conventional mechanical seal"), the flushing passage formed in the seal case is constituted by an annular empty chamber, which is concentric with the rotating shaft, and a plurality of flushing liquid discharge holes, which communicate with the empty chamber and a flushing liquid supply passage that supplies flushing liquid and are provided to the inner peripheral part of the seal case and open at positions spaced apart in the peripheral direction; and it is configured so that the flushing liquid is discharged from these flushing liquid discharge holes toward the entire periphery of the seal portion. Therefore, it is anticipated that the seal portion will be cooled more effectively than when the flushing liquid is discharged from a single flushing liquid discharge hole as in the case of the first conventional mechanical seal.

Meanwhile, when a large quantity of flushing liquid is required for cooling (such as under high-pressure conditions or high-speed rotation conditions, or when a fluid with a low boiling point is handled), even though a plurality of flushing liquid discharge holes are provided as in the second conventional mechanical seal, because the flushing liquid supply passage is connected at one location in the peripheral direction of the empty chamber, that is, because the flushing liquid is supplied from the flushing liquid supply passage to the empty chamber at a single location in the empty chamber, the pressure loss determined by the length of the passage is not the same between the flushing liquid discharge holes closer to the flushing liquid supply location and the flushing liquid discharge holes that are farther away from this flushing liquid supply location. As a result, the discharge flow amount and rate of the flushing liquid become different, and the seal portion cannot be uniformly cooled for its entire periphery. Therefore, just as in the first conventional mechanical seal, the cooling is uneven around the seal portion, and there is a risk that heat distortion will occur at the sealing end surfaces.

In particular, as to a sealing ring provided to a seal case, since the sealing ring does not rotate, the place where the flushing liquid is discharged in the seal portion is consistent and does not change; as a result, pronounced cooling temperature unevenness occurs in the peripheral direction of the seal portion not only when there is just one flushing discharge hole but also when there are a plurality of flushing discharge holes.

Therefore, in both of the first and second conventional mechanical seals, cooling of the seal portion is not performed sufficiently and uniformly for the entire periphery, the relative rotational sliding contact of the sealing rings is not performed properly because of thermal distortion at the sliding contact faces of the sealing rings (the sealing end surfaces), and the sealing function of a mechanical seal (hereinafter referred to as the "mechanical seal function") is not carried out well.

Also, part of the fluid in the sealed fluid region (hereinafter referred to as the "sealed fluid") is generally used as the flushing liquid, but if the sealed fluid is a high-temperature fluid, the sealed fluid has to be cooled with a cooling device before being supplied to the flushing passage, and a cooling device with a high cooling capacity is required to adequately cool the seal portion with the flushing liquid. Thus, the problems of high initial cost and running cost will occur, as well as a loss of thermal efficiency in the rotary device.

It is an object of the present invention to provide an end surface-contact mechanical seal in which these problems do not occur, the relative rotational sliding contact portions of the sealing rings can be sufficiently and uniformly cooled for their entire periphery, and a good mechanical seal function can be provided for a long period of time.

### Solution to Problem

According to the present invention there is provided an end surface-contact mechanical seal arrangement with the features of claim 1.

The present invention provides an end surface-contact mechanical seal that is comprised of a fixed sealing ring, which is fixed to either a seal case or a rotating shaft that passes through this seal case, and a movable sealing ring, which is held by the other movably in the axial direction of the rotating shaft in a state of being urged so as to be pressed against the fixed sealing ring, said seal thus being configured so that the relative rotational sliding contact action of the sealing end surfaces of the sealing rings creates a shielding seal for a sealed fluid region and a non-sealed fluid region, and a flushing means being further provided for discharging a flushing liquid from a flushing passage formed in the seal case toward the relative rotational sliding contact portions of the sealing rings,
wherein, so as to accomplish the object described above, the present invention particularly proposes to form coating layers, which are composed of a material having a higher heat conduction coefficient and hardness than the constituent material of the sealing rings, continuously on the portions of the surfaces of the sealing rings where the flushing liquid makes contact with and on the sealing end surfaces.

The coating layers are constituted by diamond.

### Advantageous Effects of the Invention

In the end surface-contact mechanical seal of the present invention, coating layers composed of a material having a higher coefficient of thermal expansion and hardness than the constituent material of the sealing rings are formed on the sealing end surfaces of the sealing rings; accordingly, wear and heat generation caused by the relative rotational sliding contact of the sealing end surfaces of the sealing rings is kept to a minimum compared to a case in which these sealing end surfaces having no coating layers formed thereon undergo relative rotational sliding contact.

Furthermore, on the sealing end surface of each sealing ring and on the portion of the surface of each sealing ring where the flushing liquid makes contact with (hereinafter referred to as "liquid contact surface"), coating layers composed of a material having a higher heat conduction coefficient than the constituent material of the sealing rings are formed continuously (hereinafter the coating layers formed on the sealing end surfaces will be referred to as "sealing end surface coating layers," and coating layers formed on the "liquid contact surface" will be referred to as "liquid contact surface coating layers"); accordingly, heat generated at the sealing end surfaces is transmitted and dispersed from the sealing end surface coating layers having a high heat conduction coefficient to the liquid contact surface coating layers having a high heat conduction coefficient, and this combines with the fact that there is less heat generated by the relative rotational sliding contact of the sealing end surfaces as discussed above, resulting in that the temperature of the sealing end surfaces as discussed above, resulting in that the temperature of the sealing end surfaces can be further lowered. On the other hand, in the liquid contact surface coating layers, regardless of whether there is just one or two or more locations where the flushing liquid is discharged in the peripheral direction of the liquid contact surface, and no matter whether or not the sealing rings are rotating, the cooling heat from the flushing liquid will be spread to the entire liquid contact surfaces, and the entire peripheries of the liquid contact surfaces are uniformly cooled. This cooling heat then propagates from the liquid contact surface coatings to the sealing end surface coating layers continuous thereto, and the sealing end surfaces are uniformly cooled overall. Therefore, compared to the first and second conventional mechanical seals in which the sealing rings on which no sealing end surface coating layers or liquid contact surface coating layers are formed make a relative rotational sliding contact, the relative rotational sliding contact portions of the sealing rings (the seal portions) are uniformly and properly cooled by the flushing liquid for their entire periphery, and the occurrence of thermal distortion that would otherwise have an adverse effect on the mechanical seal function is kept to a minimum.

Therefore, according to the present invention, wear, heat generation, and thermal distortion can be kept to a minimum in the relative rotational sliding contact portions of the sealing rings, and the mechanical seal function can be properly exhibited over an extended period, meaning that an extremely practical end surface-contact mechanical seal can be provided with durability and reliability superior to those of the first and second conventional mechanical seals.

Furthermore, in the end surface-contact mechanical seal of the present invention, when part of the sealed fluid is used as the flushing liquid, even if this sealed fluid is a high-temperature fluid, the formation of coating layers with a high heat conduction coefficient improves, as discussed above, the efficiency of cooling by the flushing liquid, so that the extent of cooling of the sealed fluid used as the flushing liquid can be kept to a minimum, there is no need for a cooling device with a high cooling capacity, and the initial cost and running cost can be reduced.

This effect is even more pronounced by making the coating layer with diamond.

### BRIEF DESCRIPTION OF THE DRAWINGS

FIG. 1 is a cross sectional view of one example of the end surface-contact mechanical seal according to the present invention.
FIG. 2 is an enlarged detailed cross sectional view of the main portion of FIG. 1.
FIG. 3 is a further enlarged detailed cross sectional view of the main portion of FIG. 2.
FIG. 4 is a cross sectional view taken along the line IV-IV in FIG. 1.

### MODES FOR CARRYING OUT THE INVENTION

Modes for carrying out the present invention will now be described specifically with reference to the drawings.

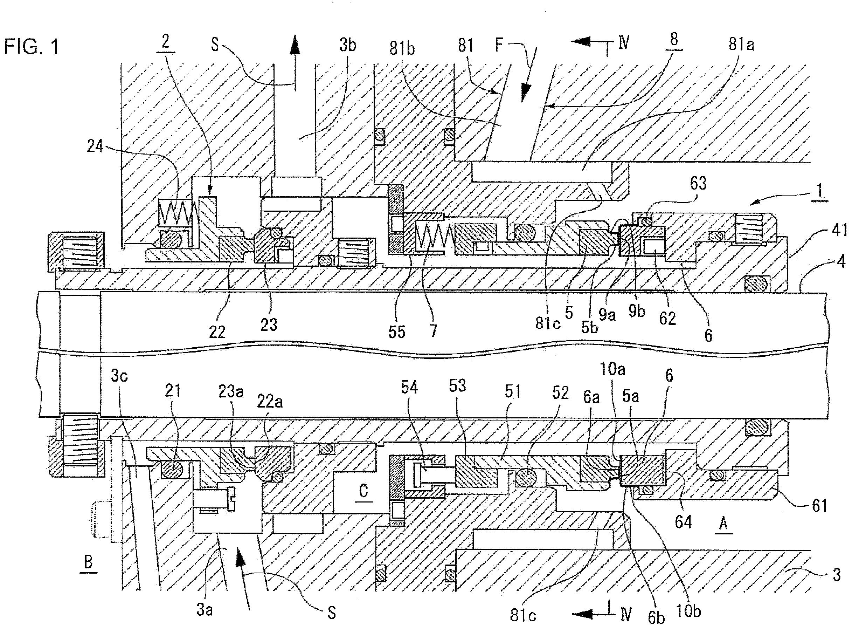

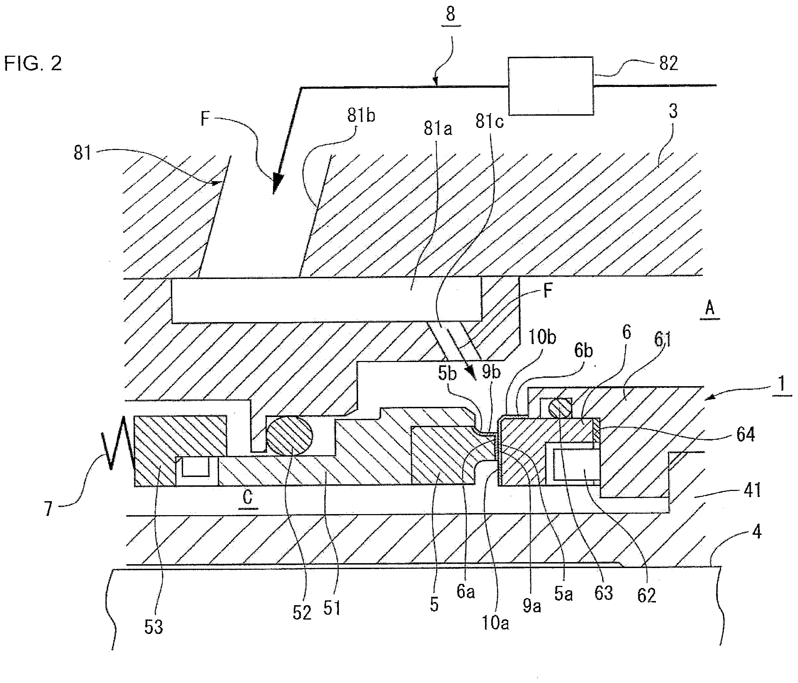

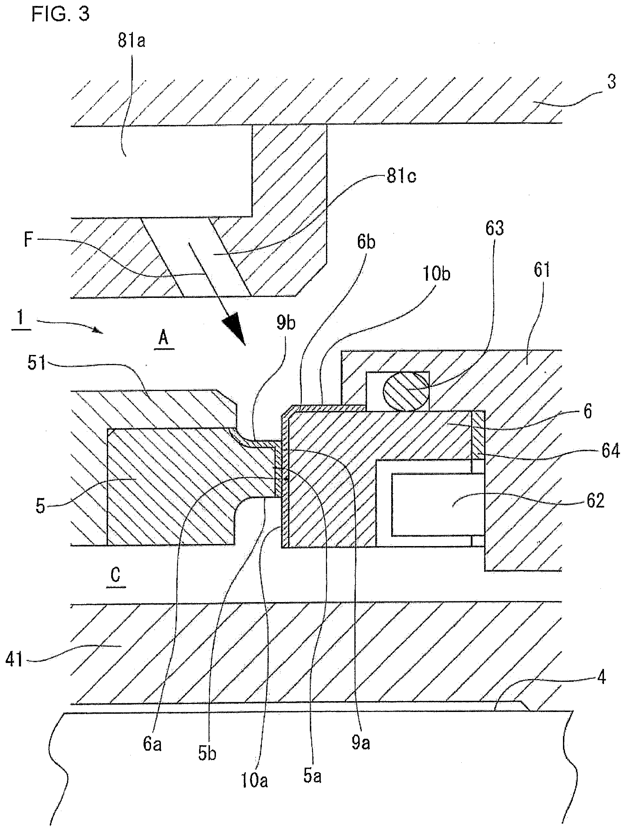

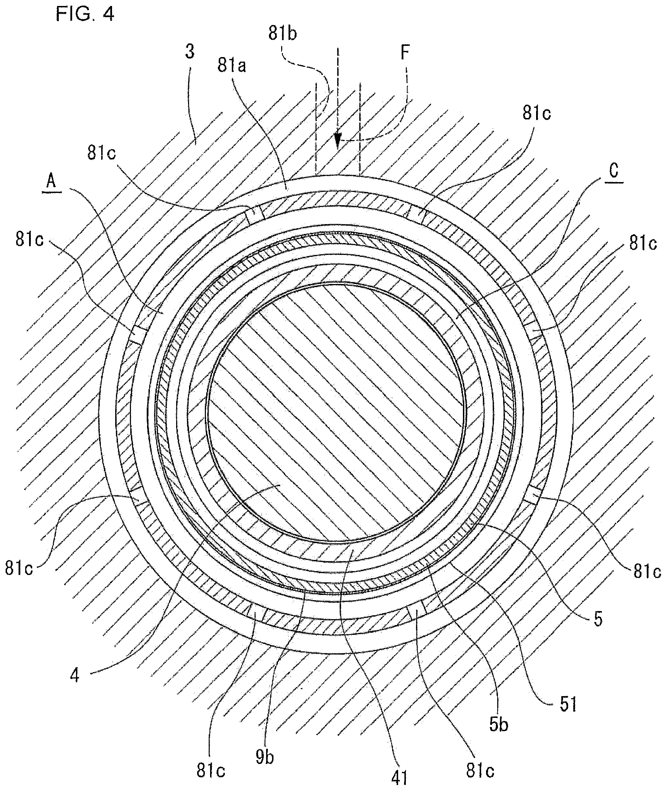

FIG. 1 is a cross sectional view of an example of a tandem double seal in which the end surface-contact seal according to the present invention is used as a primary seal. FIG. 2 is an enlarged detailed cross sectional view of the main portion of FIG. 1. FIG. 3 is a further enlarged detailed cross sectional view of the main portion of FIG. 2. FIG. 4 is a cross sectional view taken along the line IV-IV of FIG. 1.

The end surface-contact mechanical seal according to the present invention shown in FIG. 1 is the one that is used as a primary seal of a tandem double seal. More specifically, as shown in FIG. 1, this tandem double seal is installed as a shaft sealing means of a rotary device such as a pump that is used with a liquid, and it is configured so that an intra-device region A and an extra-device atmospheric region B of the rotary device are sealed by a first mechanical seal 1 (primary seal) and a second mechanical seal 2 (secondary seal) that are disposed in tandem with a sealing liquid region C formed between the two mechanical seals 1 and 2.

As shown in FIG. 1, a sealing liquid supply passage 3a and a sealing liquid discharge passage 3b are formed in a seal case 3 so as to open into the sealing liquid region C, and pure water, oil, or other such sealing liquid S is circulated at an appropriate pressure into the sealing liquid region C. A drain passage 3c that opens into the extra-device atmospheric region B on the proximal end side of the second mechanical seal 2 is formed in the seal case 3 so as to discharge and recover the sealing liquid S.

The first mechanical seal 1, which is a primary seal, on the intra-device region A side is, as shown in FIG. 1, an end surface-contact mechanical seal according to the present invention; and it is installed between the cylindrical seal case 3, which is provided to a shaft seal housing of the rotary device, and a rotating shaft 4 of the rotary device, which passes through the seal case 3. The first mechanical seal 1 comprises a movable sealing ring 5 provided to the seal case 3, a fixed sealing ring 6 provided to the rotating shaft 4, a spring 7 interposed between the seal case 3 and the movable sealing ring 5, and a flushing means 8. This end surface-contact mechanical seal is configured such that the relative rotational sliding contact action of sealing end surfaces 5a and 6a that are the opposing end surfaces of the sealing rings 5 and 6 creates a shielding seal for a sealed fluid region A, which is the region on the outer peripheral side of the seal portions 5a and 6a of this relative rotational sliding contact portion, and a non-sealed fluid region C, which is the region on the inner peripheral side thereof. The sealed fluid region A is the intra-device region, and the fluid thereof (the sealed fluid) is a liquid. The non-sealed fluid region C is an intermediate region between the extra-device atmospheric region B and the intra-device region A formed between the mechanical seals 1 and 2, and it is the sealing liquid region in which the sealing liquid S is circulated as described below.

The movable sealing ring 5 is, as shown in FIGS. 1 and 2, an annular body made from a hard material (silicon carbide or another such ceramic, cemented carbide (tungsten carbide), or the like) and is mated and fixed by shrink fitting or the like in such a state that a sealing end surface formation part 5b thereof protrudes from the distal end of a cylindrical retaining ring 51. The proximal end of the retaining ring 51 is mated with the inner peripheral part of the seal case 3 via an O-ring 52, so that the movable sealing ring 5 is held by the seal case 3 movably in the axial direction of the rotating shaft 4 (hereinafter referred to simply as the "axial direction"). The distal end surface of the movable sealing ring 5, that is, the distal end surface of the sealing end surface formation part 5b, is constituted as a sealing end surface 5a, which is an annular, smooth surface that is perpendicular to the axis of the rotating shaft 4 (hereinafter referred to simply as the "axis"). An annular spring receiver 53 is mated with the proximal end of the retaining ring 51, and as shown in FIG. 2, a drive pin 54 that protrudes linearly parallel to this spring receiver 53 is inserted in an annular spring retainer 55 that is mated and fixed to the inner peripheral part of the seal case 3, thus allowing the retaining ring 51, that is, the movable sealing ring 5, to move for a specific range in the axial direction, while preventing relative rotation thereof with respect to the seal case 3.

The fixed sealing ring 6 is, as shown in FIG. 1, an annular body made from a hard material (silicon carbide or another such ceramic, cemented carbide, or the like) and is mated and held in such a state that a sealing end surface formation part 6b thereof protrudes from the distal end of a cylindrical retaining ring 61. The retaining ring 61 is mated and fixed to a sleeve 41 that is placed over and fixed to the rotating shaft 4, so that the fixed sealing ring 6 is fixed to the rotating shaft 4 on the intra-device region A side of the movable sealing ring 5. The distal end surface of the fixed sealing ring 6, that is, the distal end surface of the sealing end surface formation part 6b, is constituted as a sealing end surface 6a, which is an annular and smooth surface that is perpendicular to the axis. The inner diameter of the sealing end surface 6a of the fixed sealing ring 6 is smaller than the sealing end surface 5a of the movable sealing ring 5 and its outer diameter is larger than the sealing end surface 5a, and thus the inner and outer peripheral portions in the radial direction bulge out from the sealing end surface 5a. As shown in FIG. 1, the fixed sealing ring 6 is mated and fixed to the retaining ring 61 in such a manner that its relative rotation with the retaining ring 61 is prevented by a drive pin 62, and an O-ring 63 and a low-friction sheet 64 (such as a sheet made of PTFE (polytetrafluoroethylene)) are interposed between the fixed sealing ring 6 and the retaining ring 61.

The spring 7 is, as shown in FIG. 1, a coil spring, and it is interposed between the spring receiver 53 and the spring retainer 55. The spring 7 urges the movable sealing ring 5 to press against the fixed sealing ring 6.

The second mechanical seal 2, which is a secondary seal, on the extra-device atmospheric region B side is, as shown in FIG. 1, an end surface-contact mechanical seal installed between the seal case 3 and the rotating shaft 4. The second mechanical seal 2 comprises a stationary sealing ring 22, which is held by the seal case 3 via an O-ring 21 so as to be movable in the axial direction and not capable of making a relative rotation, a rotary sealing ring 23, which is disposed on the intra-device region A side and is fixed to the sleeve 41 of the rotating shaft 4, and a spring 24, which is interposed between the stationary sealing ring 22 and the seal case 3 and urges the stationary sealing ring 22 to press against the rotary sealing ring 23. The relative rotational sliding contact action of sealing end surfaces 22a and 23a, which are the opposing end surfaces of the respective sealing rings 22 and 23, creates a shielding seal of the sealed fluid region (sealing liquid region) C, which is the region on the outer peripheral side of the relative rotational sliding contact portions 22a and 23a, and the non-sealed fluid region (extra-device atmospheric region) B, which is the region on the inner peripheral side thereof.

The flushing means 8 is adapted to discharge a flushing liquid F from the seal case 3 toward the seal portions 5a and 6a (which are the relative rotational sliding contact portions of the sealing rings 5 and 6) of the first mechanical seal 1. As shown in FIG. 2, the flushing means 8 is comprised of a flushing passage 81 that is formed in the seal case 3 and a flushing liquid supply device 82 that circulates and supplies part of the liquid (sealed fluid) in the sealed fluid region A to the flushing passage 81 as the flushing liquid F. As shown in FIGS. 1 and 2, the flushing passage 81 comprises a cylindrical empty chamber 81a that is concentric with the rotating shaft 4 and extends in the axial direction of the rotating shaft 4, a flushing liquid supply passage 81b that communicates with and is connected to one end of the empty chamber 81a, and a plurality of flushing liquid discharge holes 81c that are disposed spacedly apart from each other evenly in the peripheral direction of the seal case 3 and pass through from the other end of the empty chamber 81a to locations directly opposite the seal portions 5a and 6a in the inner peripheral face of the seal case 3. As shown in FIG. 4, the flushing liquid discharge holes 81c are evenly spaced apart around the sealing end surface formation parts 5b and 6b of the sealing rings 5 and 6, and they are designed to discharge the flushing liquid F toward the entire periphery of the seal portions 5a and 6a. So as to comply with a sealed fluid when it is high in temperature, the flushing liquid supply device 82 may be equipped with a cooling device for cooling the flushing liquid F that is supplied to the flushing passage 81.

In the first mechanical seal 1, according to the present invention, coating layers 9a, 9b and 10a, 10b, which are composed of a material with a lower coefficient of friction and a higher hardness and heat conduction coefficient compared to those of the constituent material of the sealing rings, are formed continuously on the portions of the surfaces of the sealing rings 5 and 6 where the flushing liquid F come into contact with (liquid contact surfaces) and on the sealing end surfaces 5a and 6a.

More specifically, as shown in FIGS. 1 to 3, the coating layers (sealing end surface coating layers) 9a and 10a are formed for the entire sealing end surfaces 5a and 6a of the sealing rings 5 and 6, respectively. Also, the liquid contact surfaces, which are the outer peripheral face portions of the sealing rings 5 and 6 and come into contact with the flushing liquid F discharged from the flushing liquid discharge holes 81c, are the outer peripheral faces of the sealing end surface formation parts 5b and 6b that protrude from the retaining rings 51 and 61 so as to be exposed to the sealed fluid region A; and as shown in FIGS. 1 to 3, on these liquid contact surfaces, coating layers (liquid contact surface coating layers) 9b and 10b, which are continuous with the sealing end surface coating layers 9a and 10a for the entire periphery, are formed for the entire liquid contact surfaces.

Furthermore, even though the constituent material of the movable sealing ring 5 and the fixed sealing ring 6 is silicon carbide or another such ceramic, or cemented carbide, or any other sealing ring constituent material, the constituent material of the coating layers 9a, 9b and 10a, 10b is diamond, whose heat conduction coefficient and hardness are higher than those of the materials of the sealing rings, and whose coefficient of friction is lower than that of the materials of the sealing rings. The diamond coating layers 9a, 9b and 10a, 10b are formed by hot filament chemical vapor deposition, microwave plasma chemical vapor deposition, a high-frequency plasma method, a direct current discharge plasma method, an arc discharge plasma jet method, a combustion flame method, or another such coating method. In the following description, when it is necessary to distinguish the sealing rings from the coating layers that cover them, the former will be called the sealing ring base.

In the end surface-contact mechanical seal (first mechanical seal) according to the present invention that is configured as described above, the sealing end surfaces 5a and 6a of the sealing rings 5 and 6 are covered respectively with the sealing end surface coating layers 9a and 10a, whose material has a higher hardness and a lower coefficient of friction than those of the above material (the constituent material of the sealing ring base). Accordingly, compared to when the sealing end surface of the movable sealing ring and the sealing end surface of the fixed sealing ring undergo relative rotation directly, that is, when the sealing ring bases directly rotate and slide relative to each other, as in the first and second conventional mechanical seals, there is less wear and less heat generated at the relative rotational sliding contact portions of the sealing end surfaces 5a and 6a that are respectively covered by the sealing end surface coating layers 9a and 10a. In particular, when the sealing end surface coating layers 9a and 10a are constituted by diamond as described above, there is an extremely little wear or heat generated by the relative rotational sliding contact of the sealing end surfaces 5a and 6a covered by the sealing end surface coating layers 9a and 10a, because diamond is the hardest solid substance found in the natural world, and its coefficient of friction is far lower than that of silicon carbide or another such ceramic, cemented carbide, or any other sealing ring constituent material (in general, the coefficient of friction of diamond is 0.03 µ, which is further at least 10% lower than that of PTFE (polytetrafluoroethylene), which has a far lower coefficient of friction than all other sealing ring constituent materials).

Furthermore, the sealing end surface coating layers 9a and 10a and the liquid contact surface coating layers 9b and 10b, which are formed by materials having a higher heat conduction coefficient than the constituent material of the sealing rings 5 and 6, are provided continuously on the sealing end surfaces 5a and 6a of the sealing rings 5 and 6 and on the entire periphery of the liquid contact surfaces where the flushing liquid F discharged from the flushing liquid discharge holes 81c comes into contact with. Accordingly, since any heat generated by relative rotational sliding contact of the sealing end surfaces 5a and 6a is dispersed by being transmitted from the sealing end surface coating layers 9a and 10a having a high heat conduction coefficient to the liquid contact surface coating layers 9b and 10b having a high heat conduction coefficient, and since the generation of heat due to the relative rotational sliding contact of the sealing end surfaces 5a and 6a is suppressed as discussed above, the temperature of the sealing end surfaces 5a and 6a is lowered. Furthermore, with respect to the liquid contact surface coating layers 9b and 10b, not only in the structure that a plurality of discharge sites 81c for the flushing liquid F (flushing liquid discharge holes) are provided in the peripheral direction of the liquid contact surfaces as discussed above, but also in a structure that just one such discharge site is provided, and not only for the fixed sealing ring 6 on the rotating shaft 4 side on which the discharge site is movable relatively for the entire periphery of the liquid contact surfaces, but also for the movable sealing ring 5 on the seal case 3 side on which the liquid contact surface is immovable relative to the discharge site, cooling heat produced by the flushing liquid F is spread out for the entire periphery of the liquid contact surface coating layers 9b and 10b, and thus the liquid contact surface coating layers 9b and 10b are uniformly cooled for their entire periphery. This cooling heat then propagates from the liquid contact surface coating layers 9b and 10b to the sealing end surface coating layers 9a and 10a that are continuous thereto, and thus the entirety of the sealing end surfaces 5a and 6a are uniformly cooled. Therefore, compared to sealing rings on which the sealing end surface coating layers 9a and 10a and the liquid contact surface coating layers 9b and 10b are not formed, that is, compared to the first and second conventional mechanical seals in which the sealing ring bases undergo relative rotational sliding contact, the relative rotational sliding contact portions (seal portions) 5a and 6a of the sealing rings 5 and 6 are cooled better and more uniformly by the flushing liquid F for their entire periphery, and thermal distortion that would have an adverse effect on mechanical seal function is kept to a minimum.

This effect is extremely pronounced by the coating layers 9a, 9b and 10a, 10b that are constituted by diamond as discussed above, because diamond has the highest thermal conductivity of all solid substances, and its thermal conductivity is far higher than that of silicon carbide or another such ceramic, cemented carbide, any all other sealing ring constituent materials (for example, the thermal conductivity of silicon carbide is 70 to 120 W/mK, while the thermal conductivity of diamond is 1000 to 2000 W/mK.)

Therefore, wear, heat generation, and thermal distortion are kept to a minimum for the sealing end surfaces 5a and 6a of the sealing rings 5 and 6, a good mechanical seal function can be exhibited over an extended period, and an extremely practical end surface-contact mechanical seal (first mechanical seal 1) can be provided that has durability and reliability superior to those of the first and second conventional mechanical seals.

Furthermore, as shown in FIG. 2, when part of the sealed fluid is used as the flushing liquid F, even if this sealed fluid is a high-temperature fluid, as described above, due to the formation of the coating layers 9a, 9b and 10a, 10b that have a high heat conduction coefficient, the cooling efficiency by the flushing liquid F improves, so that the extent of cooling of the sealed fluid used as the flushing liquid F can be kept to a minimum, there is no need for a cooling device that has a high cooling capacity, and the initial cost and running cost can be reduced.

The configuration of the present invention is not limited to the embodiment above, and suitable modifications and improvements can be made without departing from the basic principle of the present invention, the latter being defined only by the appended claim.

For example, the present invention is applicable to a situation in which the above-described second mechanical seal 2 is not provided, and the first mechanical seal 1 is used as a single seal. Also, it is applicable to a situation in which the first mechanical seal 1 is configured so that the fixed sealing ring is fixed to the seal case, and the movable sealing ring is held movably in the axial direction by the rotating shaft, or a situation in which the sealing end surface of one of the sealing rings is configured as a knife edge seal having a microscopic radial surface width. The present invention is further applicable to an end surface-contact mechanical seal in which the sealing end surfaces of both sealing rings have the same inner and outer diameters, or to an end surface-contact mechanical seal in which the surfaces that come into contact with the flushing liquid are provided for all the way around the entire outer peripheral faces of the sealing rings. Furthermore, the present invention is applicable to an end surface-contact mechanical seal in which just one flushing discharge hole is provided, or to an end surface-contact mechanical seal in which part of the sealed fluid is not used as the flushing liquid. There are thus no limitations on the configuration of the end surface-contact mechanical seal or the flushing means to which the present invention is applied, nor on the constituent materials of the sealing rings (the constituent materials of the sealing ring bases), which can be selected as desired.

### LIST OF REFERENCE SYMBOLS

- 1: First mechanical seal (End surface-contact mechanical seal)
- 2: Second mechanical seal
- 3: Seal case
- 3a: Sealing liquid supply passage
- 3b: Sealing liquid discharge passage
- 3c: Drain passage
- 4: Rotating shaft
- 5: Movable sealing ring
- 5a: Sealing end surface of movable sealing ring
- 5b: Sealing end surface formation part of movable sealing ring
- 6: Fixed sealing ring
- 6a: Sealing end surface
- 6b: Sealing end surface formation part of fixed sealing ring
- 7: Spring
- 8: Flushing means
- 9a: Sealing end surface coating layer
- 9b: Liquid contact surface coating layer
- 10a: Sealing end surface coating layer
- 10b: Liquid contact surface coating layer
- 21: O-ring
- 22: Stationary sealing ring
- 22a: Sealing end surface of stationary sealing ring
- 23: Rotary sealing ring
- 23a: Sealing end surface of rotary sealing ring
- 24: Spring
- 41: Sleeve
- 51: Retaining ring
- 52: O-ring
- 53: Spring receiver
- 54: Drive pin
- 55: Spring retainer
- 61: Retaining ring
- 62: Drive pin
- 63: O-ring
- 64: Low-friction sheet
- 81: Flushing passage
- 81a: Empty chamber
- 81b: Flushing liquid supply passage
- 81c: Flushing liquid discharge hole
- 82: Flushing liquid supply device
- A: Intra-device region A (Sealed fluid region)
- B: Extra-device atmospheric region
- C: Sealing liquid region (Non-sealed fluid region)
- F: Flushing liquid
- S: Sealing liquid

## Claims

1. An end surface-contact mechanical seal arrangement comprising:
a fixed sealing ring (6), which is fixed to either one of a seal case (3) and a rotating shaft (4) that passes through the seal case (3), and a movable sealing ring (5), which is held by the other movably in an axial direction of said rotating shaft (4) in a state of being urged so as to be pressed against said fixed sealing ring (6), so that a relative rotational sliding contact action of sealing end surfaces (5a, 6a) of said sealing rings (5, 6) creates a shielding seal of a sealed fluid region (A) and a non-sealed fluid region (C), and
a flushing means (8) for discharging a flushing liquid (F) from a flushing passage (81) formed in said seal case (3) toward relative rotational sliding contact portions of said sealing rings (5, 6),
**characterized in that** coating layers (9a, 9b, 10a, 10b), which are composed of a material having a higher heat conduction coefficient and hardness than a constituent material of said sealing rings (5, 6), are formed continuously on portions of surfaces of said sealing rings (5, 6) where the flushing liquid (F) makes contact with and on said sealing end surfaces (5a, 5b, 6a, 6b), wherein the coating layers (9a, 9b, 10a, 10b) are constituted by diamond.

## Patentansprüche

1. Gleitringdichtungsanordnung mit Endflächenkontakt, umfassend:
einen festen Dichtungsring (6), der entweder an einem Dichtungsgehäuse (3) oder an einer rotierenden Welle (4), die durch das Dichtungsgehäuse (3) hindurchgeht, befestigt ist, und einen beweglichen Dichtungsring (5), der von dem jeweils anderen in einer axialen Richtung der rotierenden Welle (4) beweglich in einem Zustand gehalten wird, in dem er so gedrängt wird, dass er gegen den festen Dichtungsring (6) gedrückt wird, so dass eine relative rotierende Gleitkontaktwirkung von Dichtungsendflächen (5a, 6a) der Dichtungsringe (5, 6) eine abschirmende Abdichtung eines abgedichteten Fluidbereichs (A) und eines nicht abgedichteten Fluidbereichs (C) erzeugt, und
eine Spüleinrichtung (8) zum Abgeben einer Spülflüssigkeit (F) aus einem in dem Dichtungsgehäuse (3) ausgebildeten Spülkanal (81) in Richtung auf relative Rotationsgleitkontaktabschnitte der Dichtungsringe (5, 6)
**dadurch gekennzeichnet, dass** Beschichtungsschichten (9a, 9b, 10a, 10b), die aus einem Material bestehen, das einen höheren Wärmeleitungskoeffizienten und eine höhere Härte als ein konstituierendes Material der Dichtungsringe (5, 6) aufweist, kontinuierlich auf Abschnitten von Oberflächen der Dichtungsringe (5, 6), an denen die Spülflüssigkeit (F) mit den Dichtungsendflächen (5a, 5b, 6a, 6b) in Kontakt kommt, und auf den Dichtungsendflächen (5a, 5b, 6a, 6b) ausgebildet sind, wobei die Beschichtungsschichten (9a, 9b, 10a, 10b) aus Diamant bestehen.

## Revendications

1. Agencement de garniture mécanique en contact avec la surface d'extrémité comprenant:
une bague d'étanchéité fixe (6), qui est fixée à l'un ou l'autre d'un boîtier d'étanchéité (3) et d'un arbre rotatif (4) qui traverse le boîtier d'étanchéité (3), et une bague d'étanchéité mobile (5), qui est maintenue par l'autre de manière mobile dans une direction axiale dudit arbre rotatif (4) dans un état de poussée de manière à être pressé contre ladite bague d'étanchéité fixe (6), de sorte qu'une action de contact coulissant en rotation relative des surfaces d'extrémité d'étanchéité (5a, 6a) desdites bagues d'étanchéité (5, 6) crée une garniture de protection d'une région de fluide scellée (A) et d'une région de fluide non scellée (C), et
un moyen de rinçage (8) pour évacuer un liquide de rinçage (F) d'un passage de rinçage (81) formé dans ledit boîtier d'étanchéité (3) vers des parties de contact coulissantes rotatives relatives desdites bagues d'étanchéité (5, 6),
**caractérisé en ce que** des couches de revêtement (9a, 9b, 10a, 10b), qui sont composées d'un matériau ayant un coefficient de conduction thermique et une dureté plus élevés qu'un matériau constitutif desdites bagues d'étanchéité (5, 6), sont formées en continu sur des parties de surfaces desdites bagues d'étanchéité (5, 6) où le liquide de rinçage (F) entre en contact avec et sur lesdites surfaces d'extrémité d'étanchéité (5a, 5b, 6a, 6b), dans lequel les couches de revêtement (9a, 9b, 10a, 10b) sont constitués de diamant.
